# EUROPEAN PATENT APPLICATION

(11) **EP 2 963 349 A1**
(43) Date of publication of application: **06.01.2016**
(21) Application number: 15167026.2
(22) Date of filing: 08.05.2015
(51) Int. Cl.: F24D 3/08, F24D 19/10

(54) **FLUID-HEATING APPARATUS**

(30) Priority: 24.06.2014 GB 201411200
(71) Applicant: Thermal Integration Limited, Sudbury Suffolk CO10 2XW (GB)
(72) Inventor: Hanson-Graville, Richard, Sudbury, Suffok CO10 2XW (GB)
(74) Representative: Carridge, Andrew Edward

(57) **Abstract**

A fluid-heating apparatus has a first heat exchanger (9) and a second heat exchanger (11). A primary conduit (3) conveys a primary fluid through, in series, the first heat exchanger and the second heat exchanger. A secondary conduit (5) conveys a secondary fluid through the first heat exchanger. A tertiary conduit (7) conveys a tertiary fluid through the second heat exchanger. A primary flow controller (13) is arranged to vary flow of the primary fluid through the primary conduit in response to at least one control signal from the primary, secondary and/or tertiary conduit.

## Description

This invention relates to a fluid heating apparatus, or system, and a method for heating water. The apparatus can be used for central heating or domestic hot water.

### Background to the Invention

Domestic hot water systems typically heat water using a boiler or another water heater such as a solar heater, or a heat pump, or a combination of different water heaters. The heated water can be stored in a hot water cylinder, or tank, such as a thermal store. When required, the heat energy in this water can be transferred to central heating water, for heating appliances such as radiators and/or the heat energy can be transferred to mains-pressure water. Typically, heat is transferred using heat exchangers, such as plate heat exchangers.

For some years, there has been an increasing use of centralised boiler plants in property developments. Advanced technologies such as Combined Heat and Power (CHP), biomass, extract air heat pumps, waste incineration and solar, that are mostly uneconomical to employ in individual properties, can be utilised and combined to generate heat to numerous properties.

Hydraulic (or Heat) Interface Units (HIUs) can be fitted into each property to take the heat from a central plant and use this to provide central heating and hot water to taps.

In existing HIUs, it is known to arrange heat exchangers in parallel. For example, one heat exchanger may heat central heating water and another heat exchanger may heat mains-pressure water. Arranging the heat exchangers in parallel means that water from the hot water cylinder (or directly from the water heaters) can be diverted to the one heat exchanger, the other heat exchanger, or to both. Although such systems can provide central heating and domestic hot water when required, the system required to control the provision of hot water can be rather expensive and complex. For example, such systems typically employ multiple control valves for diverting water to the first and/or second heat exchangers when required.

It is desired to provide a simple and cost-effective system for providing central heating and domestic hot water, as and when required, and to be able to provide water at pre-determined temperatures.

### Summary of the Invention

The invention provides a fluid heating apparatus, method and a kit as defined in the appended independent claims. Advantageous or preferred features are set forth in dependent claims.

The apparatus may thus provide a fluid-heating apparatus. The apparatus may comprise a first heat exchanger, a second heat exchanger and a primary conduit (or passageway or pipe) for conveying (or arranged to convey) a primary fluid through, in series, the first and second heat exchangers. The apparatus may comprise a secondary conduit (or passageway or pipe) for conveying (or arranged to convey) secondary fluid through the first heat exchanger and a tertiary conduit (or passageway or pipe) for conveying (or arranged to convey) tertiary fluid through the second heat exchanger.

In use, the apparatus may control flow of the primary fluid in response to at least one control or input signal. The control signal may be from the primary, secondary and/or tertiary conduit. A primary flow controller may be arranged or programmed to vary the flow of the primary fluid through the primary conduit.

In use, the first heat exchanger may transfer heat between the primary fluid in the primary conduit and the secondary fluid in the secondary conduit, whereas the second heat exchanger may transfer heat between the primary fluid in the primary conduit and tertiary fluid in the tertiary conduit.

Advantageously, the apparatus may operate by requiring only one primary flow controller, rather than multiple controllers typically required in a system employing heat exchangers arranged in parallel. The apparatus may be simpler and more cost-effective than existing systems. As well as been cost effective, the simplification of control mechanism to a single primary conduit and flow controller may simplify the control logic required to make the system function.

Furthermore, the simpler layout can lead to significant pipework and space savings.

In addition, the use of a single control valve may result in easier fault finding, and may reduce the number of spare parts engineers are required to carry. In existing systems which employ heat exchangers in parallel, the types of control valve are often dissimilar.

In one embodiment, the primary conduit may be a primary circuit. The primary circuit may, in use, circulate primary fluid through the first and second heat exchangers, and may allow primary fluid to pass between the first and second heat exchangers and a source of heated primary fluid. The apparatus may thus comprise a source of heated primary fluid, such as a fluid heater of fluid storage tank.

The secondary conduit may be a secondary circuit. The secondary circuit may, in use, circulate secondary fluid through the first heat exchanger and may allow secondary fluid to pass between central heating appliances e.g. radiators, and the first heat exchanger. The apparatus may thus comprise heating appliances.

The tertiary conduit may be a tertiary circuit. The tertiary circuit may, in use, circulate tertiary fluid through the second heat exchanger and may deliver tertiary fluid, such as mains-pressure water to and from the second heat exchanger.

The apparatus of the invention also encompasses a pre-assembled or pre-fabricated unit, which may be sold as an individual unit. The unit may thus be connectable to form an apparatus having a source of heated primary fluid, heating appliances, and/or a mains-pressure water supply. Preferably, the unit is a HIU. The primary conduit of the unit may have a primary in connection and a primary out connection enabling the primary conduit to form part of a primary circuit, once installed. Similarly, the secondary conduit may have a secondary in connection and a secondary out connection enabling the secondary conduit to form part of a secondary circuit, once installed. The tertiary conduit may have a tertiary in connection and a tertiary out connection for enabling the tertiary conduit to form part of a tertiary circuit, once installed.

The apparatus of the invention may comprise, or may be part of, a network or system having a plurality of units, such that the primary circuit feeds primary fluid to a number of units. For example, there may be a central source of heated primary fluid, for example a central plant, that supplies heated primary fluid (via a primary circuit) to each unit. The plurality of units may function independently to heat secondary and/or tertiary fluid as required. Each unit may have individual, or separate, secondary and tertiary circuits.

The first and second heat exchangers arranged in series may mean that flow of the primary fluid through the first and second heat exchangers cannot be varied independently. So, at any time during operation, flow rate of the primary fluid through the first and second heat exchangers may be substantially the same. Primary fluid flowing through the primary conduit may flow through both the first and second heat exchangers but is not able to flow only to the first heat exchanger or only to the second heat exchanger. An arrangement of heat exchangers in series can be contrasted with a parallel arrangement of heat exchangers, where primary fluid could be diverted to flow to either the first heat exchanger or the second heat exchanger, or flow rate between the first and second heat exchangers could be varied independently. The heat exchangers may be said to be arranged in series in respect of the primary conduit, or the primary conduit may be said to have first and second heat exchangers arranged in series.

In use, the fluid preferably passes through the first heat exchanger before passing through the second heat exchanger.

In a preferred embodiment, the first and/or second heat exchangers are plate heat exchangers.

The primary flow controller preferably is, or comprises, a valve, preferably a two port valve, more preferably a three-port valve. However, the primary flow controller could comprise a pump with variable speed.

The apparatus may comprise a by-pass for allowing primary fluid to by-pass the first and second heat exchangers. Incorporation of a three-port valve may allow for incorporation of the by-pass. A restriction or valve may be arranged to limit the flow of primary fluid though the by-pass. Diversion of primary fluid through the by-pass may occur when heating of the secondary and tertiary fluids is not required.

In a particularly preferred embodiment, the secondary conduit is a central heating conduit, for conveying central heating fluid. The first heat exchanger may thus be a central heating heat exchanger.

In another particularly preferred embodiment, the tertiary conduit is a domestic hot water (or mains-pressure water) conduit, for conveying mains-pressure water. The second heat exchanger may thus be a domestic hot water heat exchanger.

Pumps may be arranged to pump fluids through the primary, secondary and/or tertiary conduits.

Preferably, the at least one control signal comprises a signal from the tertiary conduit. Preferably the signal is indicative of a temperature of the tertiary fluid, most preferably a temperature of the tertiary fluid that has been heated by the second heat exchanger or has passed through the second heat exchanger.

The apparatus preferably comprises at least one temperature sensor. One or more temperature sensors may be arranged to monitor temperature of the primary, secondary and/or tertiary fluids, in use.

In a particularly preferred embodiment, a temperature sensor is arranged to monitor a temperature of the tertiary fluid flowing from the second heat exchanger (a tertiary out temperature sensor). For example, the temperature sensor may be arranged to monitor a temperature of tertiary fluid heated by the second heat exchanger. It may be mounted close to, or possibly inserted into, the second heat exchanger. The temperature sensor may be arranged, or configured to provide a control signal to the primary flow controller such that the primary flow controller can modulate the flow of the primary fluid in response to temperature changes. This may mean that the temperature of the tertiary fluid flowing from the second heat exchanger is maintained at a pre-determined temperature, or does not exceed a pre-determined temperature. Preferably, the pre-determined temperature is 40-65°C, such as 55°C. The pre-determined temperature may be adjustable.

Controlling the temperature of the tertiary fluid may be the main purpose of the system. For example, overriding control may be provided by the primary flow controller in response to the temperature of tertiary fluid flowing from the second heat exchanger.

Preferably, the apparatus comprises a secondary flow controller for controlling flow of the secondary fluid in the secondary conduit in response to a control signal. In a preferred embodiment, the secondary flow controller is a pump with variable speed, but it could comprise a valve. In use, varying the flow rate of the secondary fluid may thus vary the temperature of the secondary fluid leaving the first heat exchanger.

The apparatus may comprise a temperature sensor arranged to monitor a temperature of the primary fluid between the first and second heat exchangers (a primary intermediate temperature sensor). It may thus monitor temperature of the primary fluid flowing from the first heat exchanger, or the temperature of the primary fluid entering the second heat exchanger. In a preferred embodiment, the primary intermediate temperature sensor may be arranged to provide a control signal to the secondary flow controller, such that the secondary flow controller can modulate the flow of the secondary fluid. The secondary controller may adjust flow rate of the secondary fluid in the secondary conduit, such that the temperature of the primary fluid leaving the first heat exchanger is maintained at a pre-determined temperature, or kept above a pre-determined temperature that is adequate to provide heat to the tertiary fluid. The temperature of the secondary fluid may be varied in order to maintain tertiary fluid output temperatures at the pre-determined temperature (see above). This may be beneficial when there is a demand for both heated primary and secondary fluid.

The primary intermediate temperature sensor may alternatively, or preferably additionally, be arranged to provide a control signal to the primary flow controller. This may provide more information to the primary controller to ensure that the tertiary fluid is not heated above the pre-determined temperature or to ensure that the temperature of the primary fluid exiting the first heat exchanger is not above a pre-determined temperature, such as about 55°C.

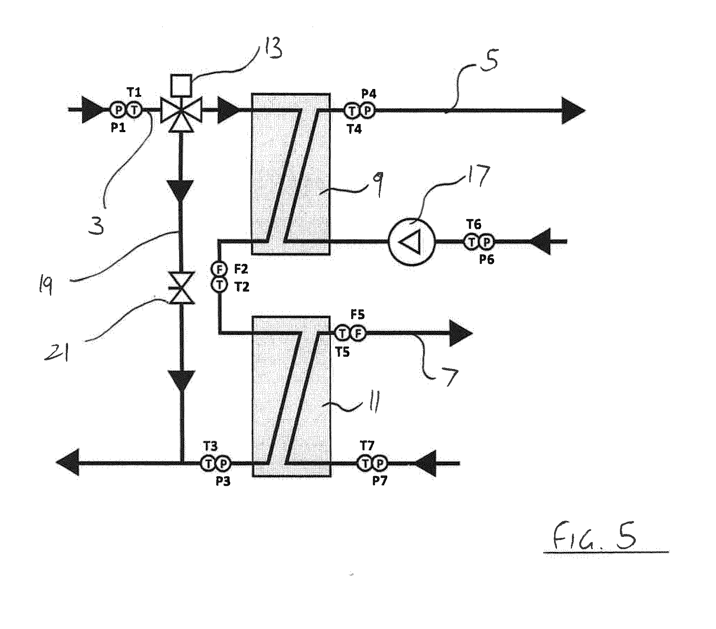

The apparatus may comprise one or more additional, or alternative, temperature sensors arranged to monitor temperature at different locations of the apparatus. Each temperature sensor may be arranged to provide a control signal to the primary flow controller and/or to the secondary flow controller, or may be used for other monitoring purposes or for providing information about the system to a user. Figure 5 exemplifies potential locations for temperature sensors.

For example, the apparatus may comprise a temperature sensor arranged to measure a temperature of a primary fluid before it enters the first heat exchanger, i.e. flowing to the first heat exchanger (a primary in temperature sensor).

The apparatus may comprise a temperature sensor arranged to measure a temperature of the primary fluid flowing from second heat exchanger (a primary out temperature sensor). The apparatus may comprise a temperature sensor arranged to measure a temperature of the secondary fluid before it enters the first heat exchanger, i.e. flowing to the first heat exchanger (a secondary in temperature sensor).

The apparatus may comprise a temperature sensor arranged to measure a temperature of the secondary fluid flowing from the first heat exchanger (a secondary out temperature sensor). This may be particularly advantageous should the secondary conduit be a central heating conduit. Monitoring the temperature at this point may allow a user to assess and adjust central heating temperatures according to comfort, or according to particular applications. For example, under-floor heating may require a lower temperature. The secondary flow controller may adjust flow rate of the secondary fluid in response to the temperature monitored by secondary out temperature sensor. However, in use, the apparatus may be subject to an overriding limit that primary water exiting the first heat exchanger should not exceed the pre-determined temperature (see above).

The apparatus may comprise a temperature sensor arranged to measure a temperature of the tertiary fluid before it enters the second heat exchanger, i.e. flowing to the second heat exchanger (a tertiary in temperature sensor).

The apparatus may be operable in different modes. For example, a first mode (or central heating mode) may operate when secondary fluid is flowing through the secondary conduit, but no tertiary fluid is passing though the tertiary conduit. This may occur if the apparatus is being used for central heating but not for domestic hot water. As tertiary fluid is not passing through the tertiary conduit there will be no change in the temperature of the tertiary fluid at the temperature sensor monitoring the temperature of the tertiary fluid that has passed through the second heat exchanger. The primary flow controller may thus not adjust the flow rate of the primary fluid in the primary conduit in order to obtain achieve the pre-determined temperature of the tertiary fluid.

In the first mode, the secondary fluid leaving the heat exchanger is preferably maintained at a desired target temperature, such as 30-80°C, typically about 70°C for radiator, or 50°C for underfloor heating. This may be achieved by varying the flow rate of the primary fluid and/or by varying the flow rate of the secondary fluid. For example, the primary intermediate temperature sensor and/or the tertiary out temperature sensor may modulate the primary flow controller and/or the secondary flow controller.

In the first mode, there may be an additional level of control. The primary flow controller may operate to ensure that the primary fluid exiting the heat exchanger does not rise above a pre-determined temperature, such as 55°C. This may be particularly advantageous for preventing lime scale build up in domestic hot water and may avoid scalding when domestic hot water is eventually required. The primary intermediate temperature sensor may send a control signal to the primary flow controller to adjust the flow rate of the primary fluid accordingly. For example, decreasing the flow rate of the primary fluid may reduce the temperature of the primary fluid exiting the heat exchanger.

A second mode (or domestic hot water mode) may operate when tertiary fluid is passing through the tertiary conduit, but no secondary fluid is passing though the secondary conduit. For example, this may occur if the apparatus is being used for domestic hot water but not for central heating. In this mode, the primary flow controller may modulate flow rate of the primary fluid such that the tertiary fluid flowing from the second heat exchanger (which may be mains-pressure hot water), is at the pre-determined temperature (such as 40-65°C). The tertiary out temperature sensor may thus modulate the primary flow controller.

A third mode (or combined mode) may operate when there is a flow of both secondary and tertiary fluid (if, for example, there is a demand for central heating and hot mains-pressure water at the same time). In this mode, the primary flow controller may modulate flow rate of the primary fluid such that the tertiary fluid flowing from the second heat exchanger (which may be mains-pressure hot water), is at the pre-determined temperature (such as 40-65°C). The tertiary out temperature sensor may modulate the primary flow controller. Compared to the second mode (described above), the primary fluid may be cooled whilst flowing through the first heat exchanger. The primary flow controller may thus adjust the flow rate of the primary fluid accordingly, such that the tertiary fluid is heated adequately at the second heat exchanger.

There may be an extra level of control in the third mode. For example, the primary intermediate temperature sensor may modulate the secondary flow controller. As the primary fluid flows through the first heat exchanger, the heat will be transferred to the secondary fluid. This could result in the temperature of the primary fluid entering the second heat exchanger being too low to heat the tertiary fluid to the desired pre-determined temperature. So, to prevent the temperature of the primary fluid dropping too low, the secondary flow controller may adjust the flow rate of the secondary fluid by, for example, reducing the flow rate of the secondary fluid.

A fourth mode (or non-operational mode) may operate where there is no demand for heated secondary or tertiary fluid (for example, if there is no demand for central heating or heated mains-pressure water). During this mode, the primary flow controller may operate such that no primary fluid flows through the first or second heat exchanger. Alternatively, a minimal flow rate may be maintained to counteract standing heat losses.

The apparatus may comprise at least one flow rate sensor. The at least one flow rate sensor may be configured to provide a control signal to the primary flow controller and/or the secondary flow controller or may be used for other monitoring purposes or for providing information about the system to a user. Figure 5 exemplifies potential locations for flow rate sensors.

For example, the apparatus may comprise a flow rate sensor arranged to detect flow rate of the tertiary fluid (a tertiary flow sensor). This may provide a control signal to the primary flow controller such that the flow rate of the primary fluid can react immediately to changes in the flow rate of the tertiary fluid. This may be particularly advantageous should the tertiary fluid be domestic hot water or mains-pressure water. Its reading may also be used in the calculation of total energy transfer.

The apparatus may comprise a flow rate sensor arranged to detect flow of the primary fluid (a primary flow sensor). This may provide a control signal to the primary flow controller and allow more accurate modulation of the valve, by providing feedback to changes in flow.

The apparatus may comprise one or more pressure sensor. The one or more pressure sensor may be configured to provide a control signal to the primary flow controller and/or the secondary flow controller or may be used such for other monitoring purposes or for providing information about the system to a user. Figure 5 exemplifies potential locations for pressure sensors.

For example, the apparatus may comprise a pressure sensor arranged to measure a pressure of a primary fluid before it enters the first heat exchanger, i.e. flowing to the first heat exchanger (a primary in pressure sensor). This may be used to monitor pressure drop across the apparatus, for confirmation of primary fluid supply pressures.

The apparatus may comprise a pressure sensor arranged to measure a pressure of the primary fluid flowing from second heat exchanger (a primary out pressure sensor). This may be used to monitor pressure drop across the apparatus, for confirmation of primary fluid supply pressures.

The apparatus may comprise a pressure sensor arranged to measure a pressure of the secondary fluid before it enters the first heat exchanger, i.e. flowing to the first heat exchanger (a secondary in pressure sensor). This may be used to monitor pressure drop across the pump (or other secondary flow controller), to allow constant pressure function to be implemented and monitoring of pump performance. It may be used to monitor leaks or overfilling of a central heating system.

The apparatus may comprise a pressure sensor arranged to measure a pressure of the secondary fluid flowing from the first heat exchanger (a secondary out pressure sensor). This may be used to monitor pressure drop across the pump (or other secondary flow controller), to allow constant pressure function to be implemented and monitoring of pump performance. It may be used to monitor leaks or overfilling of a central heating system.

There may be a pressure sensor arranged to measure a pressure of the tertiary fluid e.g. the pressure of the tertiary fluid flowing to the second heat exchanger (a tertiary pressure sensor).

The invention may provide a method for heating fluid. The method may comprise controlling flow of a primary fluid through a primary conduit, the primary conduit conveying primary fluid, in series, through a first heat exchanger for heating a secondary fluid in a secondary conduit, and a second heat exchanger for heating a tertiary fluid in a tertiary conduit. The flow of the primary fluid may be controlled in response to at least one control signal from the primary, secondary and/or tertiary conduit.

Preferably, the at least one control signal that affects the flow of the primary fluid comprises a signal indicative of a temperature of the tertiary fluid heated by the second heat exchanger or that has passed through the second heat exchanger.

The at least one control signal that affects the flow of the primary fluid may, alternatively or additionally, comprise a control signal indicative of a temperature of the primary fluid between the first and second heat exchangers. This may correspond to the temperature for the primary fluid flowing from the first heat exchanger, or the temperature of the primary fluid entering the second heat exchanger.

The method may comprise controlling the flow of the primary fluid such that the tertiary fluid heated by the heat exchanger does not exceed a pre-determined temperature, or is heated to a pre-determined temperature. The pre-determined temperature may be 40-65°C.

The method may comprise controlling the flow of the secondary fluid in response to at least one control signal from the primary, secondary and/or tertiary conduit. This may comprise a signal indicative of a temperature of primary fluid between the first heat exchanger and the second heat exchanger, and/or a temperature of the secondary fluid heated by the first heat exchanger.

The invention may provide a kit. The kit may comprise a first heat exchanger and a second heat exchanger; a primary conduit for conveying primary fluid through, in series, the first heat exchanger and the second heat exchanger; a secondary conduit for conveying a secondary fluid through the first heat exchanger; and a tertiary conduit for conveying tertiary fluid through the second heat exchanger.

The kit may comprise a primary flow controller, preferably in the form of a valve, for varying flow of the primary fluid through the first and second heat exchangers.

The kit may also comprise at least one sensor as described in any form above. The sensor may be in communication with, or adapted or programmed to communicate with (or connect to), the primary flow controller, for providing a signal to the primary controller. Preferably, the at least one sensor comprises a temperature sensor positioned, or positionable, to monitor the temperature of tertiary fluid leaving the second heat exchanger. The temperature sensor may be positioned, or positionable, in the second heat exchanger, adjacent to the second heat exchanger or in a tertiary fluid output from the second heat exchanger.

The kit may also comprise a secondary flow controller for controlling flow of the secondary fluid in the secondary conduit in response to a control signal. The secondary flow controller is preferably a variable speed pump.

The kit may comprise a temperature sensor positionable or positioned between the first and second heat exchangers, for monitoring temperature of primary fluid exiting the first heat exchanger, or entering the second heat exchanger. The temperature sensor is preferably arranged or programmed to communicate with, or can be arranged to communicate with (or connect to), the primary flow controller and/or the secondary flow controller.

Components of the kit may not be in an assembled form, but may be adapted for being assembled into an apparatus as described above. The kit may comprise instructions for assembling an apparatus, or unit as described above, or carrying out a method as described above.

The kit may exist as a single unit, such as a HIU, in which at least some components of the kit are pre-assembled or prefabricated. For example, the unit may be a substantially contained unit or box comprising one or more of the components described above. For example, the unit may comprise the first heat exchanger, the second heat exchanger, the primary conduit, the secondary conduit, the tertiary conduit, the primary flow controller and the at least one sensor (such as the temperature sensor positioned, or positionable, to monitor the temperature of tertiary fluid leaving the second heat exchanger). The unit may further comprise the secondary fluid controller and the temperature sensor located between the first and second heat exchangers. The unit may be connectable or adapted to connect to a primary circuit, a secondary circuit and/or a tertiary circuit. The unit, when installed, may provide an apparatus as described above, or operate according to the method as described above. The unit may be connectable to an existing water heating system or apparatus. For example, the unit may have a primary fluid input and output, a secondary fluid input and output and tertiary fluid input and output.

The invention may provide an apparatus substantially as described herein, with reference to the drawings.

The invention may provide a method substantially as described herein, with reference to the drawings.

The method may provide a kit substantially as described herein, with reference to the drawings.

### Description of Specific Embodiments of the Invention

Embodiments of the invention will now be described, by way of example, with reference to the accompanying drawings, in which:
Figure 1 is a schematic diagram of a water-heating apparatus according to an embodiment of the invention;
Figure 2 is a schematic diagram of a water-heating apparatus according to another embodiment of the invention, in a central heating mode;
Figure 3 is a schematic diagram of the water-heating apparatus of figure 2 in domestic hot water mode;
Figure 4 is a schematic diagram of the water-heating apparatus of figures 2 and 3 in a combined heating mode; and
Figure 5 is a schematic diagram of a water heating apparatus according to another embodiment of the invention.

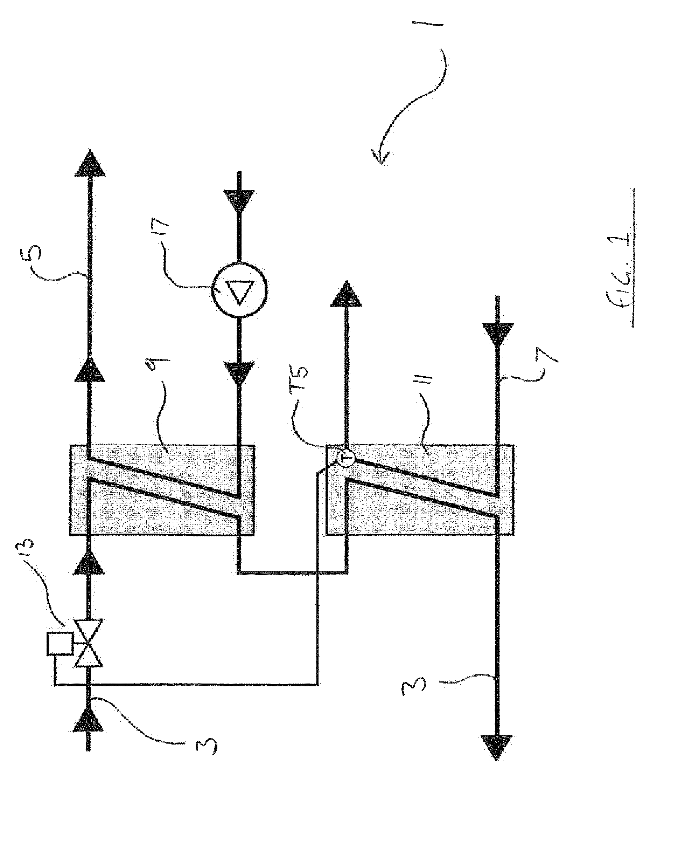

A water-heating apparatus or system 1 as shown in figure 1 has a primary circuit 3 containing primary fluid, a secondary circuit in the form of a central heating (CH) circuit 5 containing CH fluid (or secondary fluid), and a tertiary circuit in the form of a domestic hot water (DHW) circuit 7 containing DHW (or tertiary fluid).

The primary circuit 3 and CH circuit 5 pass though a CH heat exchanger 9. The primary circuit and DHW circuit 7 pass through a DHW heat exchanger 11. Both heat exchangers are plate heat exchangers and are arranged in series with respect to the primary circuit.

A primary flow controller in the form of a modulating valve 13 is positioned in primary circuit 3. The valve is in communication with a DHW out (or tertiary out) temperature sensor T5 positioned within the DHW heat exchanger 11.

The CH circuit 5 has a CH pump 17. The primary circuit 3 and DHW circuit 7 also have a pump, but these are not shown.

In use, heated primary fluid from a fluid heater or a fluid store (not shown) flows through the primary circuit 3, through both the CH and DHW heat exchangers 9, 11. The heated primary fluid is supplied from a water cylinder (not shown). Typically, before entering the CH heat exchanger, the water is at a temperature of about 75°C. The heated primary fluid passes through the CH heat exchanger and the DHW heat exchanger. As the heated primary fluid flows through the CH heat exchanger, it is able to transfer heat to CH fluid in the secondary circuit. The heated CH fluid can then flow to CH appliances (not shown) such as radiators. Once the primary fluid has left the CH heat exchanger, it is cooler than when it entered the CH exchanger, but it still retains sufficient heat (typically at least 70°C) to heat DHW when passing through the DHW heat exchanger.

It is important that DHW is heated to a particular temperature otherwise it could scald an end user or could be too cold to use. The apparatus 1 ensures that DHW is heated to (typically) 55 °C, by varying the flow rate of the primary fluid in the primary circuit 3 accordingly. The flow rate of the primary fluid is controlled by the modulating valve 13 in response to a temperature sensed by the DHW out temperature sensor T5. The temperature of the primary fluid entering the DHW heat exchanger 11 can vary depending on, for example, whether the CH circuit 5 is in operation, and if so, the temperature of the CH fluid in the CH circuit.

When DHW fluid begins to flow, the DHW out temperature sensor T5 will see a drop in temperature and the valve will begin modulating to maintain 55°C. When DHW is stopped, the DH temperature sensor will see a rise in temperature, and the valve will close. The DHW out temperature sensor has overriding control of the system.

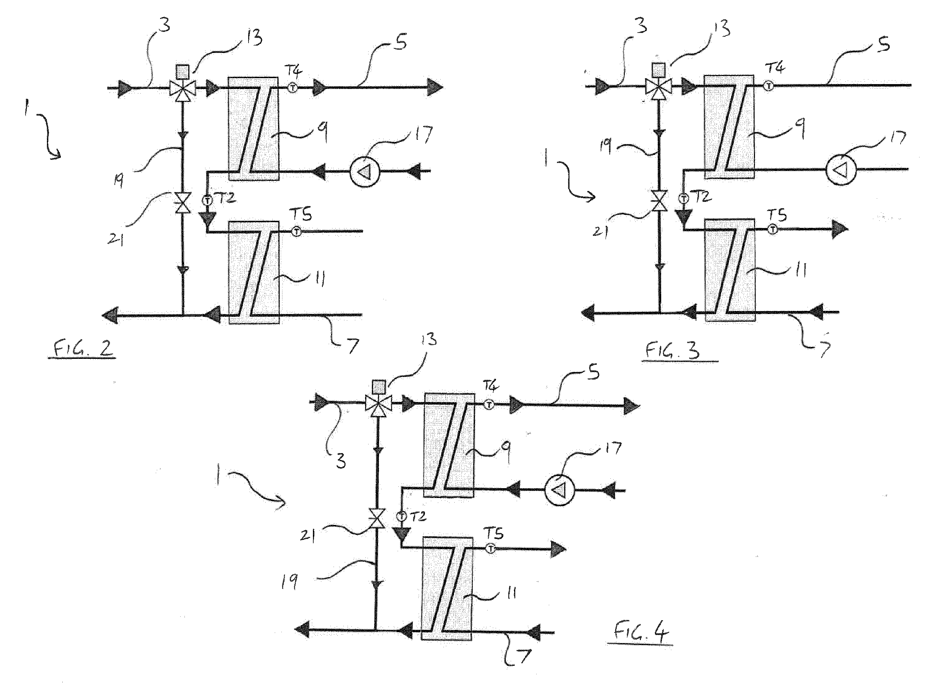

The water-heating system 1 as shown in figures 2-4 is largely similar to the system in figure 1. Similar features have been assigned like-reference numerals. In addition to the components described in figure 1, the system of figures 2-4 has a primary intermediate temperature sensor T2 between the CH heat exchanger 9 and the DHW heat exchanger 11. The system also has bypass 19 with a bypass restriction 21. The modulating diverting valve 13 is a three-port valve (rather than a two-port valve, as in figure 1) and the CH pump 17 is a variable speed pump in communication with the primary intermediate temperature sensor. The primary intermediate temperature sensor is also in communication with the valve. A CH out (or secondary out) temperature sensor T4 is positioned to monitor temperature of CH fluid leaving the CH heat exchanger, and is in communication with the pump 17.

Figures 2-4 show the system operating in three different modes. Figure 2 shows a central heating only mode. In the central heating only mode, DHW is not flowing through the DHW circuit 7, but CH fluid is flowing through the CH circuit 5. The valve 13 modulates the flow of the primary fluid such that the CH fluid is heated to the desired temperature, typically about 70°C. However, a condition is imposed on the system such that primary fluid exiting the CH heat exchanger 9 does not rise over 55°C. The primary intermediate temperature sensor T2 is able to monitor this temperature and send a signal to the valve, such that the valve can adjust the flow rate of the primary fluid accordingly. This advantageously prevents lime scale build-up and the potential for DHW scalding.

The speed of the pump 17 may also be adjusted to achieve the desired target CH temperature, in response to the temperature monitored by the CH out temperature sensor T4.

Figure 3 shows a hot water only mode, in which DHW is flowing through the DHW circuit 7, but CH fluid is not flowing through the CH circuit 5. The system modulates the flow of the primary fluid through the primary circuit 3 such that the DHW fluid is delivered at the desired temperature (typically 55°C). The DHW out temperature sensor T5 allows the valve 13 to control flow in order to obtain the desired temperature. The primary intermediate temperature sensor T2 is also used to provide additional information compared to T5 alone, to ensure DHW water is not heated over 55°C.

The return temperature of the primary fluid, i.e. the temperature of the primary fluid leaving the second heat exchanger 11 is typically about 10-25°C

Figure 4 shows a combined load mode, in which there is a demand for DHW and CH. In this mode, the valve 13 modulates the flow of the primary fluid through the primary circuit 3 such that the DHW leaving the second heat exchanger is delivered at the desired temperature (typically about 55°C). The flow rate of the primary fluid has to take into account the how much heat has been transferred to the CH fluid at the first heat exchanger 9.

As a further level of control in the combined mode, the speed of the pump 17 in the CH circuit 5 is modulated such that the primary fluid exiting the CH heat exchanger 9 does not drop too low to generate sufficiently hot DHW. Pump speed is modulated according to the temperature monitored by the primary intermediate temperature sensor T2. To prevent temperature of the primary fluid leaving the CH heat exchanger dropping too low, the pump speed may decrease.

The bypass 19 and the bypass restriction 21 allow primary fluid to pass through the system without passing through the CH heat exchanger 9 and the DHW heat exchanger 11. This may occur if there is no demand for heated CH fluid or heated DHW fluid. Primary fluid may also pass through the bypass when primary fluid is flowing through the DHW heat exchanger and the CH heat exchanger (as shown in figures 2-4). The bypass may thus allow a trickle flow through the system to keep pipework hot.

The water-heating system shown in figure 5 is substantially the same as the water heating systems of figures 1-4. Similar features have been assigned like reference numerals. However, figure 5 shows positions of temperature, flow and pressure sensors that could be incorporated into the system. The DHW out temperature sensor T5, the primary intermediate temperature sensor T2 and the CH out temperature sensor T4 have been discussed above.
T1 - Primary in temperature sensor
T3 - Primary out temperature sensor
T6 - CH in (or secondary in) temperature sensor
T7 - DHW in (or tertiary in) temperature sensor

F2 - Primary flow sensor
F5 - DHW (or tertiary) flow sensor

P1 - Primary in pressure sensor
P3 - Primary out pressure sensor
P4 - CH out (or secondary out) pressure sensor
P6 - CH in (or secondary in) pressure sensor
P7 - DHW (or tertiary) pressure sensor

The DHW flow sensor F5 senses the flow rate to taps, and allows the system to react immediately to changes in flow in the DHW circuit 7. This may allow the flow rate of the primary fluid to be adjusted more rapidly than if only the DHW out temperature sensor T5 was present. The primary flow sensor F2 enables the control routines to more accurately modulate the valve by providing feedback to changes in flow.

A combination of the primary in temperature sensor T1, the primary flow sensor F2 and the primary out temperature sensor T3 allows the total energy transfer to be calculated, and using this further functions can be implemented such as limits on transfer rates.

The primary in pressure sensor P1 and the primary out pressure sensor P3 can be used to measure pressure drop across the system, for confirmation of primary supply pressures.

The CH out pressure sensor P4 and the CH in pressure sensor P6 can be used to measure pressure drop across the heating pump, to allow constant pressure function to be implemented and for monitoring pump performance.

The CH out pressure sensor P4 or the CH in pressure sensor P6 can be used to monitor leaks or overfilling of central heating system.

The DHW pressure sensor P7 can be used to provide a check for adequate cold water supply pressures.

A combination of the DHW out temperature sensor T5, DHW out flow sensor F5 and the DHW in temperature sensor T7 allows the DHW energy transfer to be calculated.

## Claims

1. A fluid-heating apparatus comprising:
a first heat exchanger;
a second heat exchanger;
a primary conduit for conveying a primary fluid through, in series, the first heat exchanger and the second heat exchanger;
a secondary conduit for conveying a secondary fluid through the first heat exchanger;
a tertiary conduit for conveying tertiary fluid through the second heat exchanger; and
a primary flow controller arranged to vary flow of the primary fluid through the primary conduit in response to at least one control signal from the primary, secondary and/or tertiary conduit.

2. An apparatus according to claim 1, in which the primary flow controller is, or comprises, a valve, preferably a three-port valve.

3. An apparatus according to any preceding claim, comprising a secondary flow controller arranged to control flow of the secondary fluid in the secondary conduit in response to a control signal, preferably, in which the secondary flow controller is a pump with variable speed.

4. An apparatus according to any preceding claim, comprising at least one temperature sensor, preferably in which the at least one temperature sensor comprises a temperature sensor arranged to monitor a temperature of the tertiary fluid leaving the second heat exchanger and provide a control signal to the primary flow controller such that the primary flow controller can control the flow of the primary fluid and such that the temperature of the tertiary fluid flowing from the second heat exchanger does not exceed a pre-determined temperature, or is heated to a pre-determined temperature, optionally in which the pre-determined temperature is 50-60°C.

5. An apparatus according to claim 4, in which the at least one temperature sensor comprises a temperature sensor arranged to monitor a temperature of the primary fluid between the first and second heat exchangers.

6. An apparatus according to claim 5 and either claim 3 or claim 4 in which the temperature sensor arranged to monitor the temperature of the primary fluid between the first and second heat exchangers is arranged to provide a control signal to the secondary flow controller, such that the secondary flow controller can control the flow of the secondary fluid to prevent the temperature of the secondary fluid falling below a pre-determined temperature.

7. An apparatus according to any preceding claim,
i) in which the first and/or second heat exchangers are plate heat exchangers; and/or
ii) comprising a by-pass, for allowing fluid to by-pass the first and second heat exchangers; and/or
iii) in which the secondary conduit is a central heating conduit; and/or
iv) in which the tertiary conduit is a domestic hot water conduit.

8. An apparatus according to any preceding claim, comprising at least one flow rate sensor configured to provide a control signal to the primary flow controller, preferably in which the at least one flow rate sensor comprises a flow rate sensor arranged to detect a flow rate of the tertiary fluid.

9. An apparatus according to any preceding claim, comprising at least one pressure sensor.

10. A method for heating fluid, comprising controlling flow of a primary fluid through a primary conduit, the primary conduit conveying primary fluid, in series, through a first heat exchanger for heating a secondary fluid in a secondary conduit, and a second heat exchanger for heating a tertiary fluid in a tertiary conduit, in which the flow of the primary fluid is controlled in response to at least one control signal from the primary, secondary and/or tertiary conduit.

11. A method according to claim 10,
i) in which the at least one control signal that controls the flow of the primary fluid comprises a signal indicative of a temperature of the tertiary fluid flowing from the second heat exchanger; and/or
ii) in which the at least one control signal comprises a control signal indicative of a temperature of the primary fluid between the first and second heat exchangers; and/or
iii) comprising controlling the flow of the primary fluid such that the tertiary fluid flowing from the heat exchanger does not exceed a pre-determined temperature, or is heated to a pre-determined temperature optionally in which the pre-determined temperature is 50-60°C.

12. A method according to claim 10 or claim 11 comprising controlling the flow of the secondary fluid in response to at least one control signal from the primary, secondary and/or tertiary conduit, optionally in which the at least one control signal that controls the flow of the secondary fluid comprises a signal indicative of a temperature of primary fluid between the first heat exchanger and the second heat exchanger, and/or a temperature of the secondary fluid heated by the first heat exchanger.

13. A kit comprising:
a first heat exchanger;
a second heat exchanger;
a primary conduit for conveying primary fluid through, in series, the first heat exchanger and the second heat exchanger;
a secondary conduit for conveying a secondary fluid through the first heat exchanger;
a tertiary conduit for conveying tertiary fluid through the second heat exchanger;
a primary flow controller for varying flow of the primary fluid through the primary conduit in response to at least one control signal from the primary, secondary and/or tertiary conduit; and
at least one sensor in communication with, or adapted or programmed to communicate with, the primary flow controller, for providing the control signal to the primary controller.

14. A kit according to claim 13
i) in which the at least one sensor is a temperature sensor positioned or positionable to monitor a temperature of tertiary fluid leaving the second heat exchanger; and/or
ii) comprising a secondary flow controller for controlling flow of the secondary fluid in the secondary circuit in response to a control signal; and/or
iii) comprising a temperature sensor positioned or positionable to monitor a temperature of primary fluid between the first and second heat exchangers, that is in communication with, or is adapted or programmed to communicate with the primary flow controller and/or the secondary flow controller; and/or
iv) in which the first heat exchanger, the second heat exchanger, the primary conduit, the secondary conduit, the tertiary conduit, the primary flow controller, the temperature sensor arranged to monitor the temperature of the tertiary fluid leaving the second heat exchanger, and optionally the temperature sensor located between the first and second heat exchangers and the secondary flow controller, form a pre-assembled unit or box, the unit or box being connectable to a primary circuit, a secondary circuit and/or a tertiary circuit.
